# EUROPEAN PATENT SPECIFICATION

(11) **EP 0 450 915 B1**
(45) Date of publication and mention of the grant of the patent: **21.12.1994**
(21) Application number: 91302881.7
(22) Date of filing: 02.04.1991
(51) Int. Cl.: B65B 21/06, B65G 37/00

(54) **Spacer and conveyor mechanism**
Vorrichtung zum Transportieren von Artikeln unter vorgegebenem Abstand
Mécanisme à espacer et à convoyer

(30) Priority: 04.04.1990 GB 9007599
(43) Date of publication of application: 09.10.1991
(73) Proprietor: THE MEAD CORPORATION, Dayton Ohio 45463 (US)
(72) Inventor: Mueller, Rolf, W-5559 Mehring (DE)
(74) Representative: Hepworth, John Malcolm

(56) References cited:
- EP-A- 0 126 553
- GB-A- 974 995
- US-A- 4 757 893

## Description

This invention relates to a spacer and conveyor mechanism of a packaging machine which correctly spaces individual articles (preferably containers such as those used in the food industry for yoghurt desserts and drinks) to form a group and which conveys the group of spaced articles along a feed path of the mechanism whereafter they are packaged into a multi-article package.

EP-A-0 126 553 discloses a spacer and conveyor mechanism according to the preamble of claim 1 in which spacer and conveyor elements have operative faces comprising a series of recesses by which articles in the feed path of the mechanisms are spaced apart to form a group which is conveyed along the feed path. The spacer and conveyor elements are mounted on a set of endless chains comprising an upper chain and a lower chain which are vertically aligned but longitudinally offset in the direction of the feed path. Each spacer and conveyor element has a leading edge attached to one of the chains and a trailing edge attached to the other of the chains and is driven thereby along a working path in the feed direction to convey the articles and, after releasing the articles, moves along a parallel return path opposite to the feed direction.

Whereas this known mechanisms is satisfactory for use with bottles and cans, its overall vertical height is too great for grouping and conveying smaller containers such as plastics pots used for dairy, dessert and some beverage products.

In the present invention, the vertical height of the mechanism is reduced by providing a different arrangement in which only one endless chain is utilised so that the mechanism is suitable for such products.

The invention provides in a packaging machine in which articles are conveyed along a feed path and formed into groups for subsequent packaging, a spacer and conveying mechanism comprising a series of spacer and conveyor elements arranged to move along a working path in the feed direction and convey said articles in the feed path and, after releasing said articles, move along a parallel return path (R) opposite to the feed direction, said spacer elements being constrained to move from the return path into the working path, and vice versa, transversely of the feed direction and held throughout their movement so that the operative faces thereof face toward said feed path, each of said spacer and conveyor elements being mounted on an endless chain by means of a connector adjacent one end of said spacer and conveyor element, and a guide element is provided at the opposite end of said spacer and conveyor element, said endless chain, said connector and guide elements cooperating with sprocket sets at opposite ends of said mechanism characterised in that said sprocket sets comprise superposed sprockets and wherein said superposed sprockets comprise an upper guide sprocket with which said connector and said guide element of each spacer and conveyor element cooperates and a lower chain sprocket with which said endless chain cooperates.

According to a feature of the invention, a pair of sprocket sets may be provided at each end of the mechanism in which the sprocket sets of each pair are offset longitudinally in the direction of the feed path by an amount which is substantially equal to the distance between said connector and said guide element of each spacer and conveyor element. In constructions where this feature is adopted, a pair of guides may extend between the endmost sprocket sets about which said encless chain is entrained and in which the endless chain, said connector and said guide element is guided. Preferably, said guides are formed by channels in longitudinally extending plastics blocks.

According to another feature of the invention, the sprocket sets about which said endless chain is entrained may each comprise a pair of like superposed sprockets comprising an upper guide sprocket with which said connector and said guide element of each spacer and conveyor element cooperates and a lower chain sprocket with which said endless chain cooperates in which, preferably, said upper and lower sprockets are integral.

According to yet another feature of the invention, the operative face of each of said spacer and conveyor elements may comprise a series of recesses for forming said articles into groups and conveying said groups along the feed path. In constructions where a series of recesses are provided, the recesses may be formed in a platform detachably connected to a support block from which said connector and said guide element extend.

An embodiment of the invention will now be described, by way of example, with reference to the accompanying drawings, in which:-
FIGURE 1 is a vertical cross-sectional view of the spacer and conveyor mechanism according to the invention;

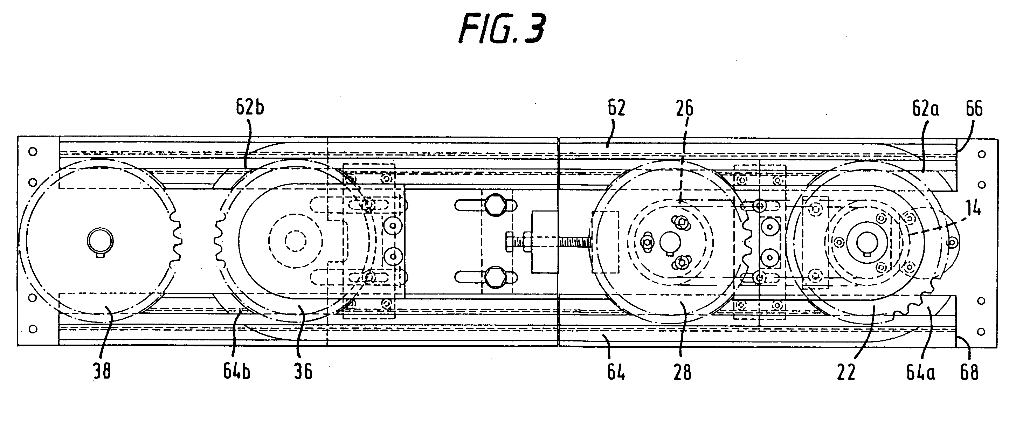

FIGURE 2 is a schematic perspective view of two complementary mechanisms mounted side-by-side as viewed from the infeed end thereof which is the reverse of Figures 1 and 3; and
FIGURE 3 is a plan view of the spacer and conveyor mechanism.

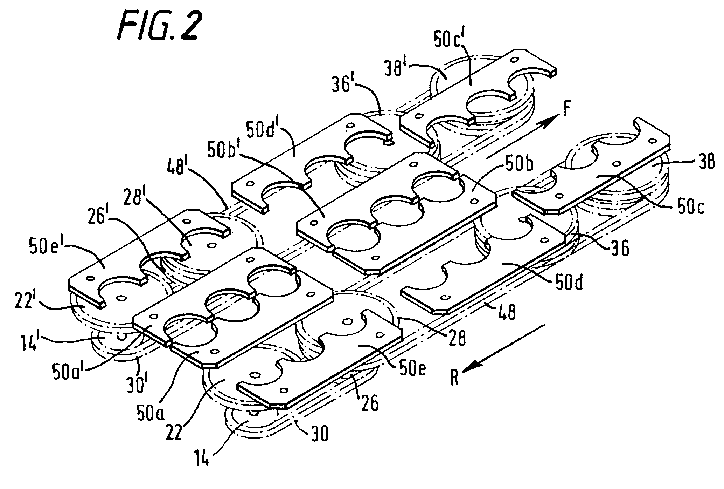

Referring to the drawings, the spacer and conveyor mechanism 10 comprises a chain and sprocket set shown generally by the reference 12. The mechanism is adapted to be installed in a packaging machine adjacent the infeed end of the machine and normally two complementary mechanisms are installed in side-by-side relationship, as shown in Figure 2 so that a container feed path is provided between the mechanisms in which like parts are designated like reference numerals with the addition of suffix "'". Only one such mechanism is described below in detail, it being understood that the other complementary mechanism is similar in all respects.

Mechanism 10 comprises a drive sprocket 14 which is keyed onto upright shaft 16 journalled in bearings 18 and 18a respectively. The base of shaft 16 carries a gear 20 through which the drive sprocket is rotatably driven from a suitable drive source via a gear box (not shown). A guide sprocket 22 is mounted atop drive sprocket 14 on shaft 16 and will be further referred to below.

The drive sprocket transmits rotational drive to sprocket set 24 comprising driven sprocket 26 and twin sprocket 28 by means of endless drive chain 30 (shown schematically) entrained about sprockets 14 and 26. Both the twin sprocket 28 and driven sprocket 26 are mounted upon upright shaft 32 rotatably journalled in bearings 34 and 34a. Twin sprocket 28 comprises an upper guide sprocket 28a and a lower integral chain sprocket 28b.

Mechanism 10 comprises two further twin sprocket sets 36 and 38, respectively, spaced longitudinally of and aligned with twin sprocket 28. Twin sprocket 36 comprises an upper guide sprocket 36a and a lower integral chain sprocket 36b mounted for rotation about fixed shaft 40 by means of rolling bearings 42 and 42a. Similarly, twin sprocket 38 comprises an upper guide sprocket 38a and a lower integral chain sprocket 38b mounted for rotation about fixed shaft 44 by means of rolling bearings 46 and 46a.

An endless chain 48 (shown schematically) is entrained about chain sprockets 28b and 38b and engages chain sprocket 36b by which rotational drive is transmitted to all the twin sprocket sets.

Chain 48 carries a series of five like spacer and conveyor elements 50 each of which has a support block 52 and an upper platform 54. An operative face of the platform comprises a series of recesses R1-R3 by which containers e.g. plastics pots, delivered to the feed path are spaced apart by a predetermined amount corresponding to the spacing of the recesses R1-R3 to form a group and the group of spaced articles is conveyed along the feed path by the spacer and conveyor element.

The configuration of the operative face of the spacer and conveyor elements can vary depending on the size and/or shape of the article to be conveyed. Indeed, platform 54 is detachably connected to support block 52 by fasteners 56 whereby the platform itself and/or the support block may be substituted by another of different size.

Each spacer and conveyor element has a leading end 50a which carries a securing pin 58 extending downwardly from the support block 52 and which attaches the spacer and conveyor element to chain 48. Intermediate its ends, the securing pin also cooperates with the guide sprockets when the mechanism is operative. The trailing end of the spacer and conveyor element has a guide stud 60 extending downwardly for cooperation with the guide sprockets of the mechanism.

Between the endmost sprockets 22 and 38 of the mechanism chain 48 is guided along longitudinal guideways 62 and 64 which are disposed radially outwardly of the sprocket sets one on each longitudinal side of the mechanism. Guideways 62 and 64 are formed in longitudinally extending plastics blocks 66 and 68 respectively and superposed arcuate guideways are also formed in the blocks adjacent the peripheral extremities of sprockets 22 and 36 to allow for the transverse movement of the spacer and conveyor elements from the working path to the return path and vice versa.

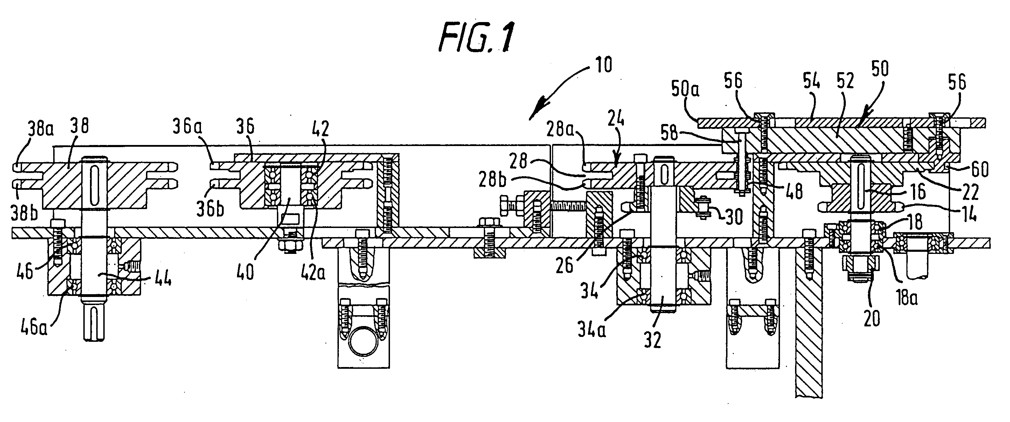

In Figure 1, spacer and conveyor element 50 can be assumed to be shown immediately before transfer from the return path R into the feed path F. Thus, the securing pin engages with twin sprocket 28 so that as the chain is carried around sprocket 28b, the intermediate portion of securing pin 58 cooperates with guide sprocket 28, so that securing pin 58 moves out of guideway 62 and into guideway 64 through suitable openings in the guideways. Simultaneously, guide stud 60 is carried by guide sprocket 22 out of the guideway 62 and through arcuate portion 62a and enters the opposite parallel guideway 64 through arcuate portion 64a. Spacer and conveyor element 50 is therefore moved transversely from the return path R to the feed path F such that its operative face is maintained facing the feed path throughout its transverse movement.

Similarly, at the opposite end of the mechanism where the spacer and conveyor element is moved transversely from the feed path to the return path, securing pin 58 passes around twin sprocket 38 whereby its intermediate portion cooperates with guide sprocket 38a. Simultaneously, guide stud 60 is carried through arcuate portion 62b out of guideways 62 and cooperates with sprocket 36a thereby to enter guideway 64 through arcuate portion 64b.

## Claims

1. A spacer and conveying mechanism for a packaging machine in which articles are conveyed along a feed path (F) and formed into groups for subsequent packaging, the mechanism (10) comprising a series of spacer and conveyor elements (50) arranged to move along said feed path in the feed direction and convey said articles in the feed path (F) and, after releasing said articles, move along a parallel return path (R) opposite to the feed direction, said spacer elements being constrained to move from the return path into the feed path, and vice versa, transversely of the feed direction and held throughout their movement so that the operative faces thereof face toward said feed path, each of said spacer and conveyor elements being mounted on an endless chain (48) by means of a connector (58) adjacent one end of said spacer and conveyor element, and a guide element (60) is provided at the opposite end of said spacer and conveyor element, said endless chain, said connector and guide elements cooperating with sprocket sets at opposite ends of said mechanism characterised in that said sprocket sets comprise superposed sprockets (22,14;28; 36; 38) said superposed sprockets comprising an upper guide sprocket (22,28a,36,38a) with which said connector and said guide element of each spacer and conveyor element cooperates and a lower chain sprocket (28b,36b,38b) with which said endless chain cooperates.

2. A mechanism according to claim 1, wherein a pair of sprocket sets (14,22,28;36,38) are provided at each end of the mechanism in which the sprocket sets of each pair are offset longitudinally in the direction of the feed path by an amount which is substantially equal to the distance between said connector and said guide element of each spacer and conveyor element.

3. A mechanism according to claim 2, wherein a pair of guides (62,64) extend between the endmost sprocket sets about which said endless chain is entrained and in which the endless chain, said connector and said guide element is guided.

4. A mechanism according to claim 3, wherein said guides are formed by channels in longitudinally extending plastics blocks (66,68).

5. A mechanism according to any preceding claim wherein said upper and lower sprockets are integral.

6. A mechanism according to any of the preceding claims wherein the operative face of each of said spacer and conveyor elements comprises a series of recesses (R1-R3) for forming said articles into groups and conveying said groups along the feed path.

7. A mechanism according to claim 6, wherein the recesses are formed in a platform (54) detachably connected to a support block (52) from which said connector and said guide element extend.

## Patentansprüche

1. Beabstandungs- und Fördermechanismus für eine Verpackungsmaschine, in der Gegenstände entlang eines Zuführdurchgangswegs (F) gefördert und in Gruppen für eine darauffolgende Verpackung angeordnet werden, wobei ein Beabstandungs- und Fördermechanismus (10) eine Reihe von Beabstandungs- und Förderelementen (50) aufweist, die so angeordnet sind, um sich entlang eines Arbeitsdurchgangswegs in der Zuführrichtung zu bewegen und die Gegenstände in den Zuführdurchgangsweg (F) zu fördern, und, nachdem die Gegenstände freigegeben sind, sich entlang eines parallelen Rückführdurchgangswegs (R) entgegengesetzt zu der Zuführrichtung zu bewegen, wobei die Beabstandungselemente gezwungen werden, sich von dem Rückführdurchgangsweg in den Zuführdurchgangsweg und umgekehrt zu bewegen, und zwar quer zu der Zuführrichtung, und durch deren Bewegung so gehalten sind, daß die Arbeitsflächen davon zu dem Zuführdurchgangsweg hin gerichtet sind, wobei jedes der Beabstandungs- und Förderelemente an einer endlosen Kette (48) mittels eines Verbinders (58) benachbart einem Ende des Beabstandungs- und Förderelements befestigt ist, und wobei ein Führungselement (60) an dem entgegengesetzten Ende des Beabstandungs- und Förderelements der endlosen Kette (48) vorgesehen ist, wobei der Verbinder (58) und die Führungselemente (60) mit Zahnsätzen an entgegengesetzten Enden des Mechanismus zusammenwirken, dadurch gekennzeichnet, daß die Zahnsätze übereinandergelegte Zähne (22,14;28; 36; 38) aufweisen und wobei die übereinandergelegten Zähne einen oberen Führungszahn (22,28a,36,38a), mit dem der Verbinder und das Führungselement jedes Beabstandungs- und Förderelements zusammenwirkt, und einen unteren Kettenzahn (28b,36b,38b), mit dem die endlose Kette zusammenwirkt, aufweist.

2. Mechanismus nach Anspruch 1, wobei ein Paar Zahnsätze (14,22,28;36,38) an jedem Ende des Mechanismus vorgesehen wird, in denen die Zahnsätze jedes Paars längs in der Richtung des Zuführdurchgangswegs um einen Betrag versetzt sind, der im wesentlichen gleich dem Abstand zwischen dem Verbinder und dem Führungselement jedes Beabstandungs- und Förderelements ist.

3. Mechanismus nach Anspruch 2, wobei sich ein Paar Führungsbahnen (62,64) zwischen den äußersten Zahnsätzen erstreckt, um die die Endloskette herumgeführt ist, und in denen die Endloskette, der Verbinder und das Führungselement geführt werden.

4. Mechanismus nach Anspruch 3, wobei die Führungen durch Kanäle in sich längs erstreckenden Kunststoffblöcken (66,68) gebildet sind.

5. Mechanismus nach einem der vorhergehenden Ansprüche, wobei der obere und der untere Zahn integral miteinander ausgebildet sind.

6. Mechanismus nach einem der vorhergehenden Ansprüche, wobei die Arbeitsfläche jedes der Beabstandungs- und Förderelemente eine Reihe von Ausnehmungen (R1-R3) aufweist, um die Gegenstände zu Gruppen zu formen und die Gruppen entlang des Zuführdurchgangswegs zu fördern.

7. Mechanismus nach Anspruch 6, wobei die Ausnehmungen in einer Aufnahmeplatte (54) gebildet sind, die abnehmbar mit einem Trageblock (52) verbunden sind, von dem sich der Verbinder und das Führungselement erstrecken.

## Revendications

1. Mécanisme d'espacement et de transport pour une machine d'emballage dans lequel les articles sont transportés le long d'un trajet d'alimentation (F) et formés en groupes en vue de leur emballage consécutif, ce mécanisme (10) comportant une série d'éléments (50) d'espacement et de transport agencés pour se déplacer le long du trajet d'alimentation (F) dans le sens de l'alimentation et transporter des articles sur ce trajet et, après avoir relâché ces articles, pour se déplacer, le long d'un trajet (R) de retour parallèle, dans le sens opposé à celui de l'alimentation, ces éléments d'espacement étant contraints à se déplacer depuis le trajet de retour dans le trajet d'alimentation et inversement, transversalement au sens d'alimentation et en maintenant, pendant tout leur déplacement, leurs faces d'entraînement des articles en direction du trajet d'alimentation, chacun des éléments (50) d'espacement et de transport étant monté sur une chaîne sans fin (48) au moyen d'une liaison (58) située à proximité d'une extrémité de cet élément, lequel est pourvu, à son extrémité opposée, d'un élément de guidage (60), la chaîne sans fin (48) et la liaison (58), ainsi que les éléments de guidage (60) coopérant avec deux jeux de pignons situés aux extrémités opposées de ce mécanisme d'espacement et de transport, lequel mécanisme est caractérisé par le fait que les jeux de pignons comprennent des pignons superposés (22, 14; 28, 36, 38) dont chacun est constitué par un pignon de guidage supérieur (22, 28a, 36, 38a) avec lequel la liaison et l'élément de guidage de chaque élément d'espacement et de transport coopèrent, et par un pignon inférieur (28b, 36b, 38b) avec lequel la chaîne sans fin coopère.

2. Mécanisme selon la revendication 1, caractérisé par le fait que deux jeux de pignons (14, 22, 28; 36, 38) sont prévus à chaque extrémité de ce mécanisme dans lequel les jeux de pignons de chacun des deux jeux d'extrémité sont décalés longitudinalement dans le sens du trajet d'alimentation suivant une distance qui est sensiblement égale à celle qui existe entre la liaison (58) et l'élément de guidage (60) de chaque élément d'espacement et de transport.

3. Mécanisme selon la revendication 2, caractérisé par le fait qu'il comporte deux guides (62, 64) qui s'étendent entre les jeux de pignons les plus extrêmes et autour desquels chaque chaîne sans fin, les liaisons (58) et les éléments de guidage (60) sont guidés.

4. Mécanisme selon la revendication 3, caractérisé par le fait que les guides (62, 64) sont constitués par des rainures prévues dans des blocs (66, 68) en matière plastique qui s'étendent longitudinalement.

5. Mécanisme selon l'une quelconque des revendication 1 à 4, caractérisé par le fait que les pignons supérieur et inférieur de chaque jeu sont solidaires l'un de l'autre.

6. Mécanisme selon l'une quelconque des revendications 1 à 5, caractérisé par le fait que la face d'entraînement des articles, de chacun des éléments d'espacement et de transport, comporte une série d'évidements (R1 - R3) adaptés pour mettre les articles en groupes et pour translater ces groupes le long du trajet d'alimentation.

7. Mécanisme selon la revendication 6, caractérisé par le fait que les évidements (R1 - R3) sont réalisés dans une plaque (54) amovible accouplée à un bloc de support (52) à partir duquel la liaison (58) et l'élément de guidage saillent.
